# EUROPEAN PATENT APPLICATION

(11) **EP 3 422 228 A1**
(43) Date of publication of application: **02.01.2019**
(21) Application number: 17755740.2
(22) Date of filing: 10.02.2017
(51) Int. Cl.: G06F 21/12

(54) **ICON PROCESSING METHOD AND DEVICE FOR APPLICATIONS**

(30) Priority: 24.02.2016 CN 201610102466
(71) Applicant: Alibaba Group Holding Limited, Grand Cayman (KY)
(72) Inventor: LIN, Guoxiong, Hangzhou Zhejiang 311121 (CN); WANG, Ling, Hangzhou Zhejiang 311121 (CN); DONG, Hang, Hangzhou Zhejiang 311121 (CN)
(74) Representative: Barker Brettell LLP
(86) International application number: PCT/CN2017/073201
(87) International publication number: WO 2017/143911

(57) **Abstract**

Disclosed are an application icon processing method and apparatus. The method includes: displaying a generic icon for identifying a first application on a screen of a terminal (S202); receiving an icon change instruction for the first application, wherein the icon change instruction is used for changing the generic icon of the first application (S204); and changing the generic icon displayed on the screen of the terminal into a camouflage icon in response to the icon change instruction (S206). The method solves the technical problem in the conventional techniques of low security of applications.

## Description

This application claims priority to Chinese Patent Application No. 201610102466.1, filed on 24 February 2016 and entitled "ICON PROCESSING METHOD AND APPARATUS FOR APPLICATIONS", which is incorporated herein by reference in its entirety.

### Technical Field

The present disclosure relates to the field of computers, and, more particularly, to an application icon processing method and apparatus.

### Background

With the rapid development of mobile Internet, mobile terminals such as smart phones and tablet computers have become indispensable personal devices in people's daily life. For common users, in the process of using various applications in the mobile terminals, the applications will store or cache some personal information of the users based on demands. Especially, applications under a social category, a payment category, and the like may generally store extremely important personal information of the users such as friend information and payment behaviors. Therefore, how to guarantee the security of applications on a personal mobile terminal undoubtedly draws increasing attention of users.

At present, icons are generally used on a user interface of a mobile terminal to identify target applications, and one icon generally corresponds to one target application (APP). As an important communication device and storage device, a mobile terminal stores a large amount of personal information of a user, some of which (such as some security information) needs to be strictly confidential. In conventional techniques, all applications are accessible once the terminal is in an unlocked state. If an unauthorized user uses the current terminal, the unauthorized user may directly open all target applications on the mobile terminal after the terminal is unlocked, then steal or modify personal information of an authorized user of the mobile terminal, which is extremely unfavorable to protecting the personal information of the authorized user of the mobile terminal. In view of the above, the conventional techniques have the technical problem of low security of applications.

There is no effective solution provided currently to solve the above problem.

### Summary

The example embodiments of the present disclosure provide an application icon processing method and apparatus, to at least solve the technical problem in the conventional techniques of low security of applications.

According to an aspect of the example embodiments of the present disclosure, an application icon processing method is provided, including: displaying a generic icon for identifying a first application on a screen of a terminal; receiving an icon change instruction for the first application, wherein the icon change instruction is used for changing the generic icon of the first application; and changing the generic icon displayed on the screen of the terminal into a camouflage icon in response to the icon change instruction.

According to another aspect of the example embodiments of the present disclosure, an application icon processing apparatus is further provided, including: a first display unit configured to display a generic icon for identifying a first application on a screen of a terminal; a first receiving unit configured to receive an icon change instruction for the first application, wherein the icon change instruction is used for changing the generic icon of the first application; and a first processing unit configured to change the generic icon displayed on the screen of the terminal into a camouflage icon in response to the icon change instruction.

In the example embodiments of the present disclosure, a generic icon for identifying a first application is displayed on a screen of a terminal; an icon change instruction for the first application is received, wherein the icon change instruction is used for changing the generic icon of the first application; and the generic icon displayed on the screen of the terminal is changed into a camouflage icon in response to the icon change instruction. By displaying the generic icon for identifying the first application on the screen of the terminal, and then responding to the icon change instruction when the icon change instruction for the first application is received, the objective of changing the generic icon displayed on the screen of the terminal into the camouflage icon is achieved, thus achieving the technical effects of camouflaging the application icon, improving elusiveness of the application and enhancing the security of the application, and further solving the technical problem in the conventional techniques of low security of applications.

### Brief Description of the Drawings

The accompanying drawings described here are used to provide a further understanding of the present disclosure, and constitute a part of the present disclosure. The example embodiments of the present disclosure and their illustrations are used to explain the present disclosure, and are not intended to improperly limit the present disclosure. In the accompanying drawings:
FIG. 1 is a block diagram of a hardware structure of a computer terminal of an application icon processing method according to an example embodiment of the present disclosure;
FIG. 2(a) is a schematic flowchart of an optional application icon processing method according to an example embodiment of the present disclosure;
FIG. 2(b) is a schematic diagram of an optional application icon processing method according to an example embodiment of the present disclosure;
FIG. 2(c) is a schematic diagram of another optional application icon processing method according to an example embodiment of the present disclosure;
FIG. 3(a) is a schematic flowchart of another optional application icon processing method according to an example embodiment of the present disclosure;
FIG. 3(b) is a schematic diagram of still another optional application icon processing method according to an example embodiment of the present disclosure;
FIG. 4(a) is a schematic flowchart of still another optional application icon processing method according to an example embodiment of the present disclosure;
FIG. 4(b) is a schematic diagram of still another optional application icon processing method according to an example embodiment of the present disclosure;
FIG. 4(c) is a schematic flowchart of still another optional application icon processing method according to an example embodiment of the present disclosure;
FIG. 5 is a schematic flowchart of still another optional application icon processing method according to an example embodiment of the present disclosure;
FIG. 6 is a schematic flowchart of still another optional application icon processing method according to an example embodiment of the present disclosure;
FIG. 7 is a schematic flowchart of still another optional application icon processing method according to an example embodiment of the present disclosure;
FIG. 8 is a schematic structural diagram of an optional application icon processing apparatus according to an example embodiment of the present disclosure;
FIG. 9 is a schematic structural diagram of another optional application icon processing apparatus according to an example embodiment of the present disclosure;
FIG. 10 is a schematic structural diagram of still another optional application icon processing apparatus according to an example embodiment of the present disclosure;
FIG. 11 is a schematic structural diagram of still another optional application icon processing apparatus according to an example embodiment of the present disclosure;
FIG. 12 is a schematic structural diagram of still another optional application icon processing apparatus according to an example embodiment of the present disclosure;
FIG. 13 is a schematic structural diagram of still another optional application icon processing apparatus according to an example embodiment of the present disclosure;
FIG. 14 is a schematic structural diagram of still another optional application icon processing apparatus according to an example embodiment of the present disclosure; and
FIG. 15 is a structural block diagram of a computer terminal according to an example embodiment of the present disclosure.

### Detailed Description

To enable those skilled in the art to better understand the technical solutions in the present disclosure, the technical solutions in the example embodiments of the present disclosure will be clearly and completely described in the following with reference to the accompanying drawings in the example embodiments of the present disclosure. It is apparent that, the example embodiments described merely represent some of rather than all of the example embodiments of the present disclosure. Based on the example embodiments in the present disclosure, all other example embodiments obtained by those of ordinary skill in the art without creative efforts should be encompassed in the protection scope of the present disclosure.

It should be noted that, terms such as "first" and "second" in the specification, the claims and the accompanying drawings of the present disclosure are used to distinguish similar objects, and are not intended to describe a specific sequence or order. It should be understood that data used in this manner may be interchanged in suitable situations, so that the example embodiments of the present disclosure described here may be implemented in sequences other than those shown or described here. Moreover, terms "include/comprise", "have" and any variation thereof are intended to cover non-exclusive inclusion, for example, a process, method, system, product or device including a series of steps or units is not limited to those steps or units clearly listed, but may include other steps or units that are not explicitly listed or are inherent in the process, method, product or device.

### Example embodiment 1

According to the example embodiment of the present disclosure, an example embodiment of an application icon processing method is further provided. It should be noted that, steps shown in the flowchart of the accompanying drawing may be executed in a computer system such as a set of computer executable instructions. Moreover, although a logic order is shown in the flowchart, in some cases, the shown or described steps may be executed in an order different from that described here.

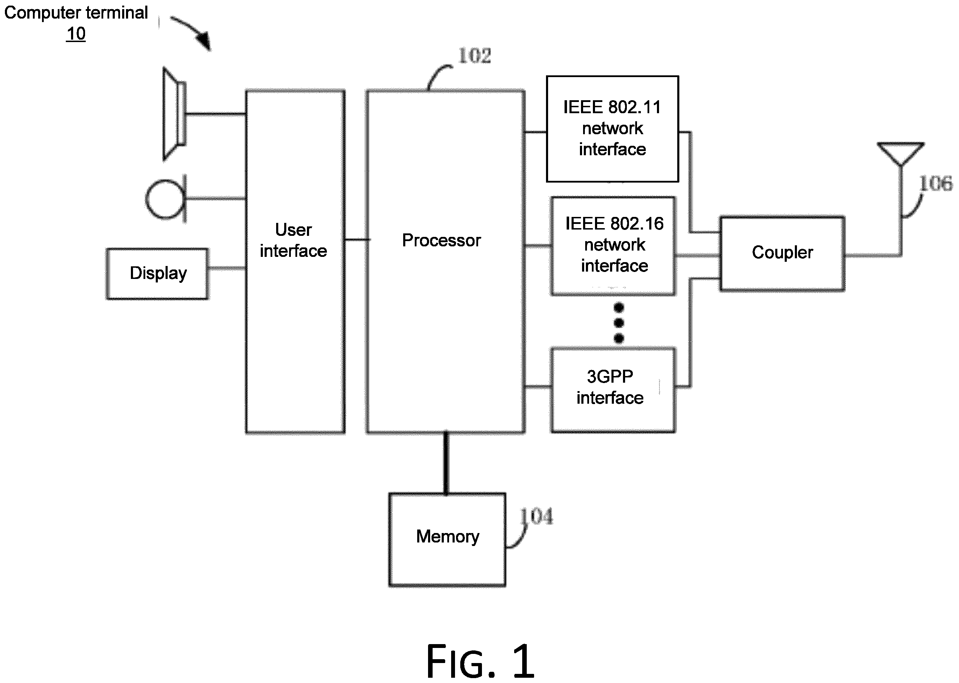

The method example embodiment provided in Example embodiment 1 of the present disclosure may be executed in a mobile terminal, a computer terminal, or a similar computing device. By running on a computer terminal as an example, FIG. 1 is a block diagram of a hardware structure of a computer terminal for an application icon processing method according to an example embodiment of the present disclosure. As shown in FIG. 1, a computer terminal 10 may include one or more (only one is shown) processors 102 (the processor 102 may include, but is not limited to, a processing apparatus such as a microprocessor MCU or a programmable logic device FPGA), a memory 104 configured to store data, and a transmission apparatus 106 configured to provide a communication function. Those of ordinary skill in the art may understand that the structure shown in FIG. 1 is merely schematic, and is not intended to limit the structure of the above electronic apparatus. For example, the computer terminal 10 may include more or fewer components than those shown in FIG. 1, or have a configuration different from that shown in FIG. 1.

The memory 104 may be configured to store a software program of application software and a module, e.g., a program instruction/module corresponding to the application icon processing method in the example embodiment of the present disclosure. The processor 102 runs the software program and module stored in the memory 104, to execute various function applications and perform data processing, i.e., implement the application icon processing method. The memory 104 may include a high-speed random access memory, and may further include a non-volatile memory, e.g., one or more magnetic storage apparatuses, a flash memory, or other non-volatile solid-state memory. In some examples, the memory 104 may further include memories remotely disposed with respect to the processor 102, and the remote memories may be connected to the computer terminal 10 through a network. Examples of the network include, but are not limited to, the Internet, an Intranet, a local area network, a mobile communication network, and their combinations.

The transmission apparatus 106 is configured to receive or send data via a network. A specific example of the network may include a wireless network provided by a communication provider of the computer terminal 10. In an example, the transmission apparatus 106 includes a Network Interface Controller (NIC), which may be connected to another network device via a base station to communicate with the Internet. In an example, the transmission apparatus 106 may be a Radio Frequency (RF) module, which is configured to communicate with the Internet in a wireless manner.

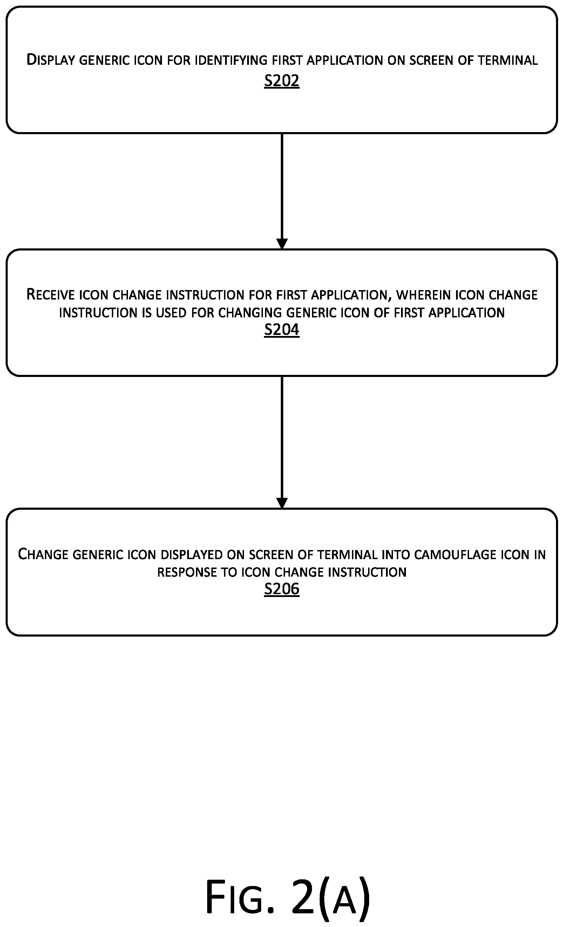

In the above running environment, the present disclosure provides an application icon processing method as shown in FIG. 2(a). FIG. 2(a) is a flowchart of an application icon processing method according to an example embodiment of the present disclosure.

As shown in FIG. 2(a), the application icon processing method may include the following implementation steps:
Step S202: A generic icon for identifying a first application is displayed on a screen of a terminal.
Step S204: An icon change instruction for the first application is received, wherein the icon change instruction is used for changing the generic icon of the first application.
Step S206: The generic icon displayed on the screen of the terminal is changed into a camouflage icon in response to the icon change instruction.

By using the above example embodiment of the present disclosure, by displaying the generic icon for identifying the first application on the screen of the terminal, and then responding to the icon change instruction when the icon change instruction for the first application is received, the objective of changing the generic icon displayed on the screen of the terminal into the camouflage icon is achieved, thus achieving the technical effects of camouflaging the application icon, improving elusiveness of the application and enhancing the security of the application, and further solving the technical problem in the conventional techniques of low security of applications.

The generic icon in the above example embodiment is an icon set by a developer during development of the first application. That is, the first application is displayed as the generic icon on the screen of the terminal after the first application is installed on the mobile terminal.

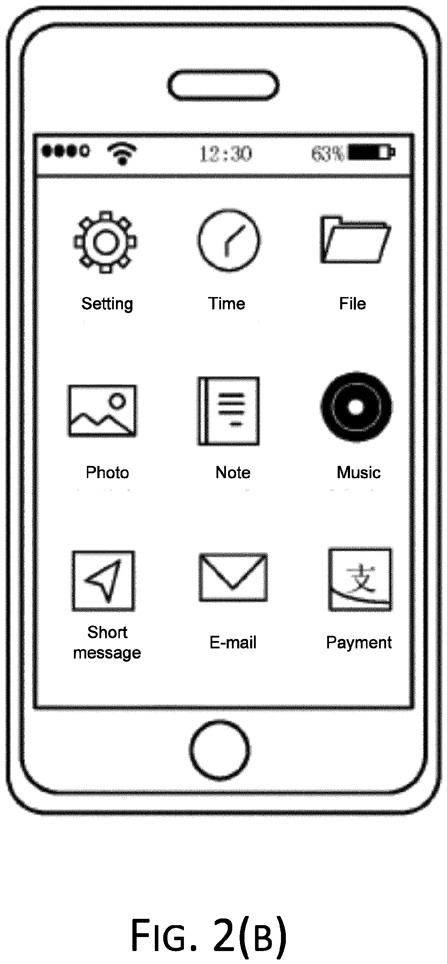

Optionally, FIG. 2(b) is a schematic diagram of an application icon processing method according to Example embodiment 1 of the present disclosure. Referring to FIG. 2(b), in step S202 of the present disclosure, the terminal may be a mobile terminal, such as a smart phone, a tablet computer, a notebook computer, or a smart watch, and may also be a personal computer PC. The first application displayed on the screen of the terminal may be a "setting" program, a "time" program, a "file" program, a "photo" program, a "note" program, a "music" program, a "short message" program, an "email" program, a "payment" program, and the like as shown in FIG. 2(b), and may also be a social application, a game application, a reading application, and other applications of various public versions (including β versions) built in a terminal system or downloaded by users through a network, not shown in FIG. 2b. Moreover, the generic icon of the first application may be understood as a user-oriented icon provided by a manufacturer or obligee of the application.

Moreover, on a terminal with an Android system, the generic icon may further be understood as a major icon (one is in an ICON format). A camouflage icon may be an auxiliary icon, and the auxiliary icon is generally not displayed on the terminal screen by default. For example, the manner of setting the major icon is setting a major icon configuration and an auxiliary icon configuration in a manifest. The major icon has two labels. One label is activity, and the label is set as Not Display. The other label is activity-alias, and the label is set as Display. The manner of setting the auxiliary icon is setting two auxiliary icon labels in the manifest. One label is activity, and the other label is activity-alias, wherein one label is displayed while the other label is not displayed.

When the major icon and the auxiliary icon are switched to be displayed on the terminal, a display state may be set by selecting labels of the major and auxiliary icons. Optionally, in the above example embodiment, one or more auxiliary icons may be set. When it is determined to switch from the major icon to the auxiliary icon for display, a target auxiliary icon is selected first, and a display state (including Display or Not Display) of the target auxiliary icon is set.

The major icon is the generic icon in the above example embodiment, and the auxiliary icon corresponds to the above camouflage icon.

Optionally, in step S204 of the present disclosure, the icon change instruction for the first application may be generated by a user as the user needs to perform an agreed operation on a terminal; and may also be set by the user in advance such that it is generated automatically by the terminal during a fixed time period or at a special location. For example, a user takes the metro after work at 19:00 every day, and the user thinks that the security of applications needs to be improved as there are many passengers on the metro in this time period. Therefore, the user may set 19:00 as the time at which a terminal automatically generates an icon change instruction, so that the terminal automatically sends an icon change instruction to the first application at 19:00 every day.

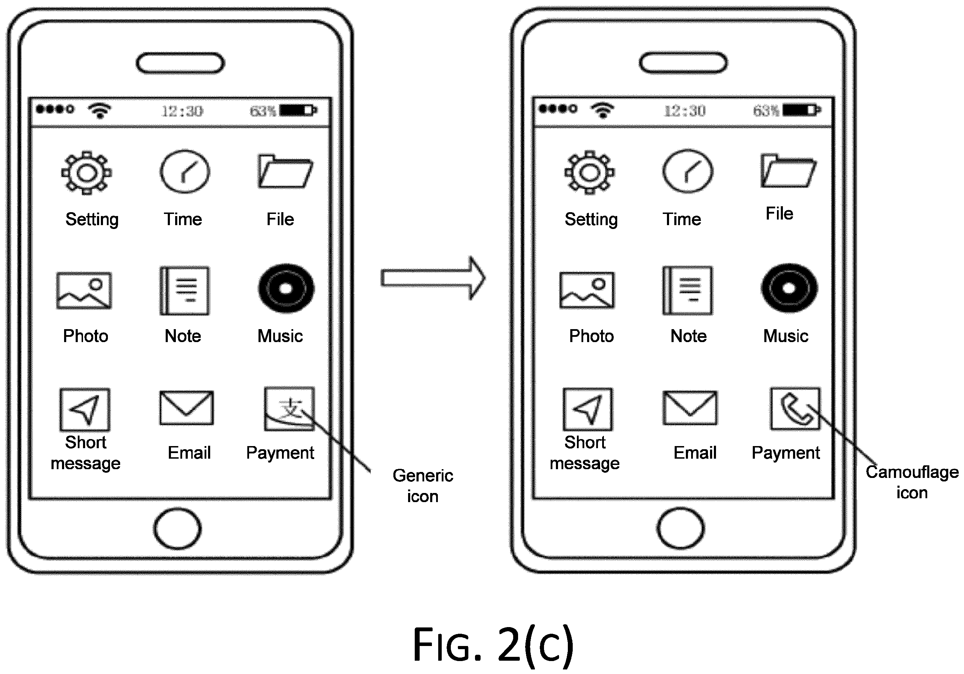

Optionally, FIG. 2(c) is a schematic diagram of an application icon processing method according to Example embodiment 1 of the present disclosure. Referring to FIG. 2(c), in step S206 of the present disclosure, the camouflage icon still points to the first application, but the camouflage icon is more elusive and misleading than the generic icon of the first application. As shown in FIG. 2(c), for example, the first application is a "payment" program. A generic icon of the "payment" program displayed on the screen of the terminal may be replaced with a camouflage icon in response to the icon change instruction, and an icon shape of the camouflage icon is "phone". If there is no prompt word of the first application on the screen of the terminal, an unauthorized user will not easily find that the camouflage icon points to the "payment" program.

Specifically, on a terminal with the Android system, name values of activity-alias in the major icon and the auxiliary icon may be extracted respectively as parameters, and an object named Component Name is created by using the two parameters to obtain a corresponding component. Then, it may be determined through the Component Name whether the major icon or the auxiliary icon is displayed currently. If the major icon is displayed currently on the terminal screen, the major icon is hidden and the auxiliary icon is displayed. If the auxiliary icon is displayed currently on the terminal screen, the auxiliary icon is hidden and the major icon is displayed.

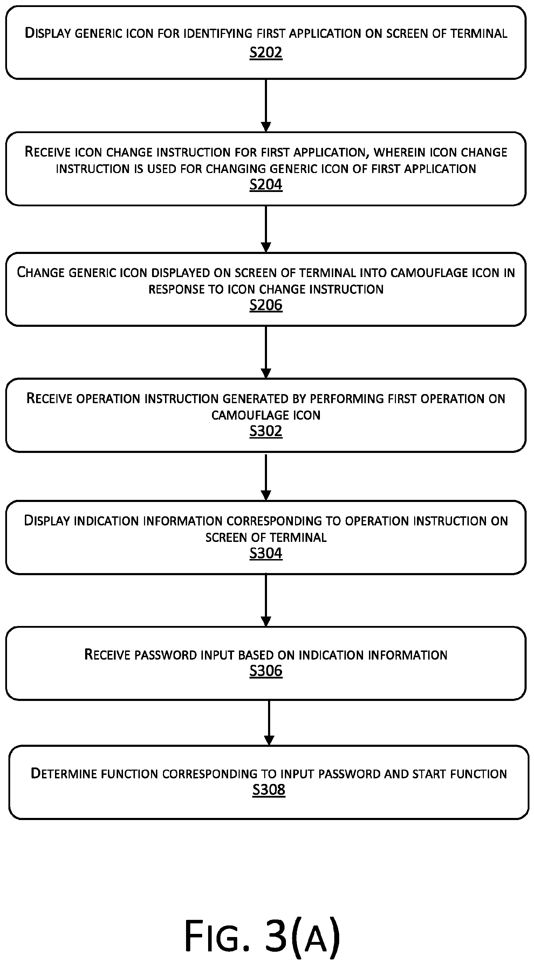

Optionally, FIG. 3(a) is a schematic flowchart of another optional application icon processing method according to an example embodiment of the present disclosure. As shown in FIG. 3(a), after the step of changing the generic icon displayed on the screen of the terminal into a camouflage icon, the method further includes the following steps.

Step S302: An operation instruction generated by performing a first operation on the camouflage icon is received.

Optionally, in step S302 of the present disclosure, the first operation executed on the camouflage icon may be tapping the camouflage icon to enter the application, long-pressing the camouflage icon to move the position of the icon, long-pressing the camouflage icon to delete the application, and the like.

Step S304: Indication information corresponding to the operation instruction is displayed on the screen of the terminal.

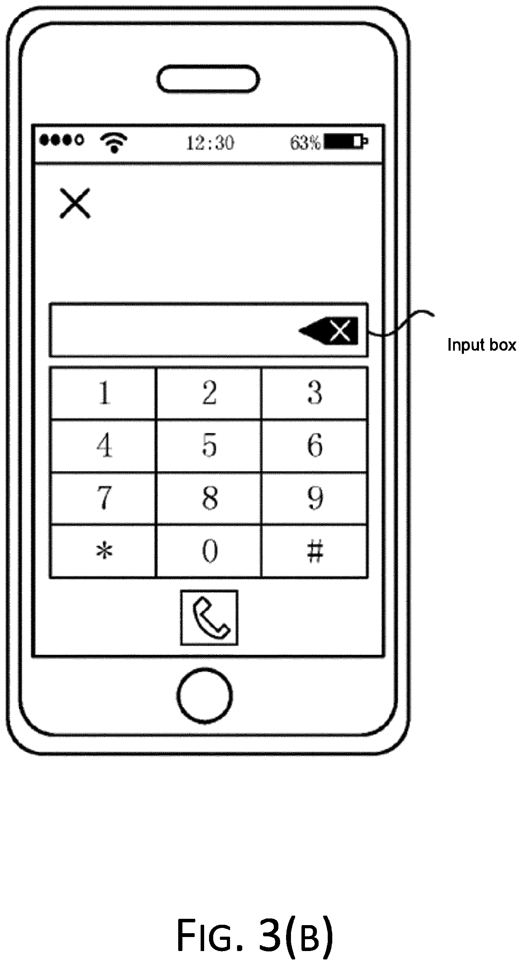

Optionally, FIG. 3(b) is a schematic diagram of another optional application icon processing method according to an example embodiment of the present disclosure. Referring to FIG. 3(b), in step S304 of the present disclosure, the indication information corresponding to the operation instruction may be a dial interface. As shown in FIG. 3(b), the user may input numerals or symbols into an input box through a dial, and may tap a cross symbol at the upper left corner of the terminal screen to return to the home screen.

Step S306: A password input based on the indication information is received.

Optionally, in step S306 of the present disclosure, the password input based on the indication information may be numerals or symbols. The number of digits of the password may be set in advance by the user as required, and a longer password has higher confidentiality and security.

Specifically, on the terminal with the Android system, one receiver may be set in the manifest to monitor the system dial, thus implementing password reception.

Step S308: A function corresponding to the input password is determined and the function is started.

Optionally, in step S308 of the present disclosure, there may be multiple passwords, and different passwords may correspond to different functions. For example, a password "1001" may correspond to a "power off' function; a password "1002" may correspond to a "music play" function; a password "1003" may correspond to a "camera" function; and a password "1004" may correspond to a "start a fly mode" function. Starting relationships between the passwords and various functions on the terminal may be set by the user.

Specifically, on the terminal with the Android system, after a correct password is detected by using the receiver, a function corresponding to the password is started.

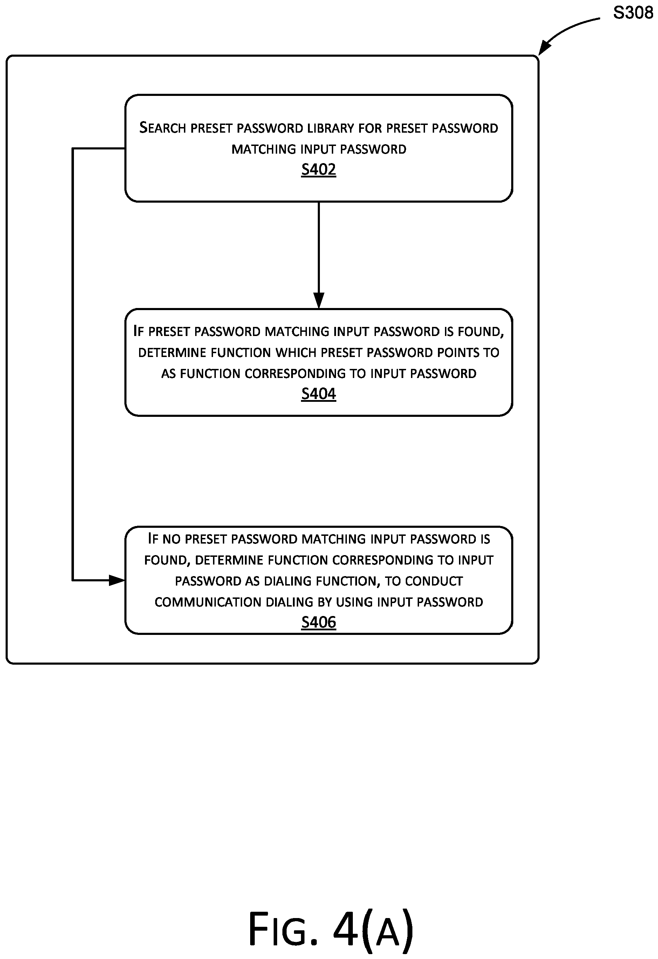

Optionally, FIG. 4(a) is a schematic flowchart of still another optional application icon processing method according to an example embodiment of the present disclosure. As shown in FIG. 4(a), the step of determining a function corresponding to the input password includes:
Step S402: A preset password library is searched for a preset password matching the input password.

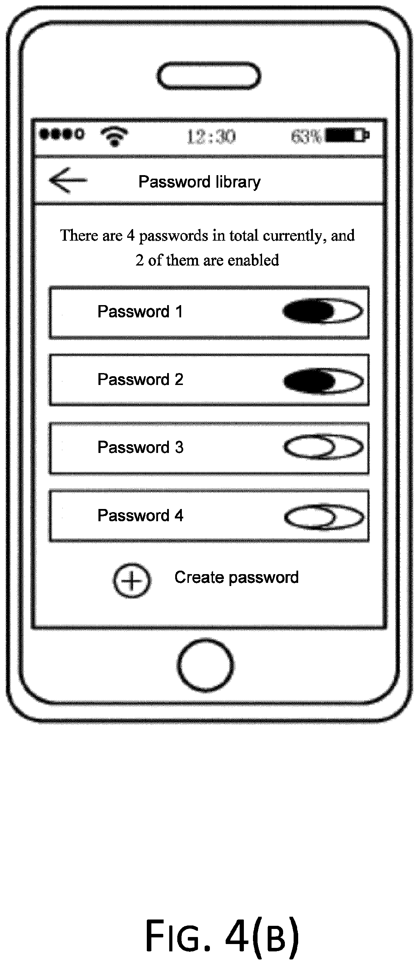

Optionally, FIG. 4(b) is a schematic diagram of still another optional application icon processing method according to an example embodiment of the present disclosure. Referring to FIG. 4(b), in step S402 of the present disclosure, some of all of passwords in a preset password library may be selected for a batch operation such as deletion. A single password in the preset password library may be edited, deleted, or replaced. Moreover, a new password may be created in the preset password library. All the passwords in the preset password library may be collectively referred to as preset passwords. States of the preset passwords may include enabled and disabled states.

Step S404: If a preset password matching the input password is found, a function that the preset password points to is determined as the function corresponding to the input password.

Optionally, in step S404 of the present disclosure, the function that the preset password points to may be a function such as opening the application and closing the application, may also be a power on/off function, and may also be a function of adjusting a running mode of the mobile phone. For example, a password "2001" may correspond to a function of "starting a power-saving mode", and a password "2002" may correspond to a function of "starting an automatic brightness adjustment mode".

Step S406: If no preset password matching the input password is found, a function corresponding to the input password is determined as a dialing function, to conduct communication dialing by using the input password.

Optionally, in step S406 of the present disclosure, when the input password is a pure-numeral password, the numerals in the password may be used for communication dialing. In this manner, the diversity of communication dialing of the terminal may be enhanced. Considering that telephone communication is an important operation manner that is frequently used in the mobile terminal, if the user enters the interface by mistake when intending to conduct communication, the user may still use the dial of this interface to perform communication dialing, without returning to the home screen or entering a commonly used communication dialing interface.

Optionally, the function that the preset password points to includes at least one of the following: starting the first application, starting a second application, and redirecting to a program interface of a third application, wherein the first application, the second application, and the third application are different from one another. It should be noted here that, the premise of redirecting to the program interface of the third application is that the user has run a program interface of an application and has executed on the program interface an operation of entering an interface where the indication information is located. In other words, the user not only may directly enter the interface where the indication information is located from the home screen, and but also may enter the interface where the indication information is located from a program interface of any application.

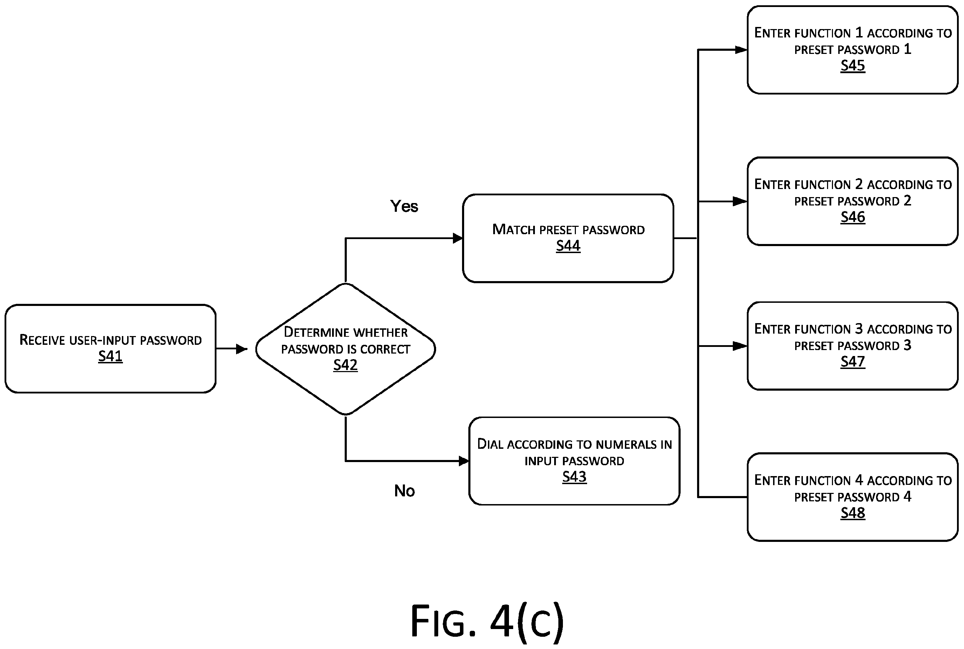

Optionally, FIG. 4(c) is a schematic flowchart of still another optional application icon processing method according to an example embodiment of the present disclosure. As shown in FIG. 4(c), the application icon processing method may include the following steps:
Step S41: A user input password is received.
Step S42: It is determined whether the user input password is correct.

Optionally, after step S42 is performed, if it is determined that the user input password is incorrect, step S43 is performed; and if it is determined that the user input password is correct, step S44 is performed.

Step S43: Dialing is conducted according to numerals in the input password.

Step S44: A preset password in a preset password library is matched.

Optionally, after the step S44 is performed, if the matched preset password is a "preset password 1", step S45 is performed.

Step S45: "Function 1" is entered according to the "preset password 1".

Optionally, after step S44 is performed, if the matched preset password is a "preset password 2", step S46 is performed.

Step S46: "Function 2" is entered according to the "preset password 2".

Optionally, after step S44 is performed, if the matched preset password is a "preset password 3", step S47 is performed.

Step S47: "Function 3" is entered according to the "preset password 3".

Optionally, after step S44 is performed, if the matched preset password is a "preset password 4", step S48 is performed.

Step S48: "Function 4" is entered according to the "preset password 4".

Optionally, the step of displaying indication information corresponding to the operation instruction on the screen of the terminal includes:
Step S10: An information input page is displayed on the screen of the terminal in response to the operation instruction, wherein the input page records the indication information, and the indication information at least includes: a numeral key and an enter key.

Optionally, in step S10 of the present disclosure, the information input page may be a dialing page, and may also be a password disk. An enter key in the indication information may be a common "enter" key or "Enter" key, and may also be a highly camouflaged key, e.g., a "dial" key or a "pause" key.

Optionally, the first operation includes a tap operation, a double-tap operation, and a long-press operation.

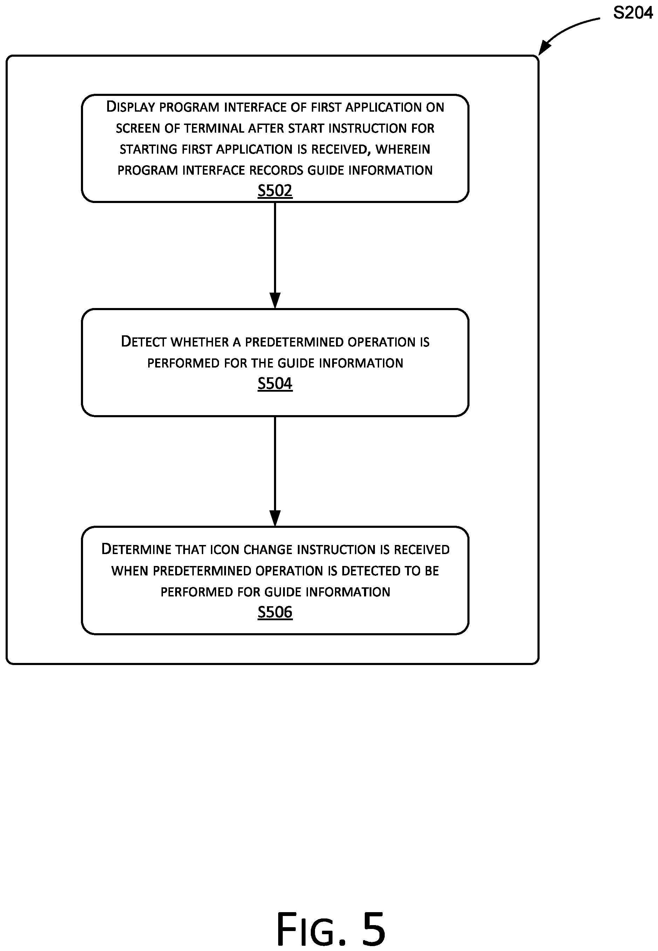

Optionally, FIG. 5 is a schematic flowchart of still another optional application icon processing method according to an example embodiment of the present disclosure. As shown in FIG. 5, the step of receiving an icon change instruction for the first application includes:
Step S502: A program interface of the first application is displayed on the screen of the terminal after a start instruction for starting the first application is received, wherein the program interface records guide information.
Step S504: It is detected whether a predetermined operation is performed for the guide information.
Step S506: It is determined that the icon change instruction is received when it is detected that the predetermined operation is performed for the guide information.

Optionally, in step S502 to step S504, the guide information may be texts or codes, and the predetermined operation may be an icon change operation, and may also be an operation of starting a single application or an operation of switching between multiple applications.

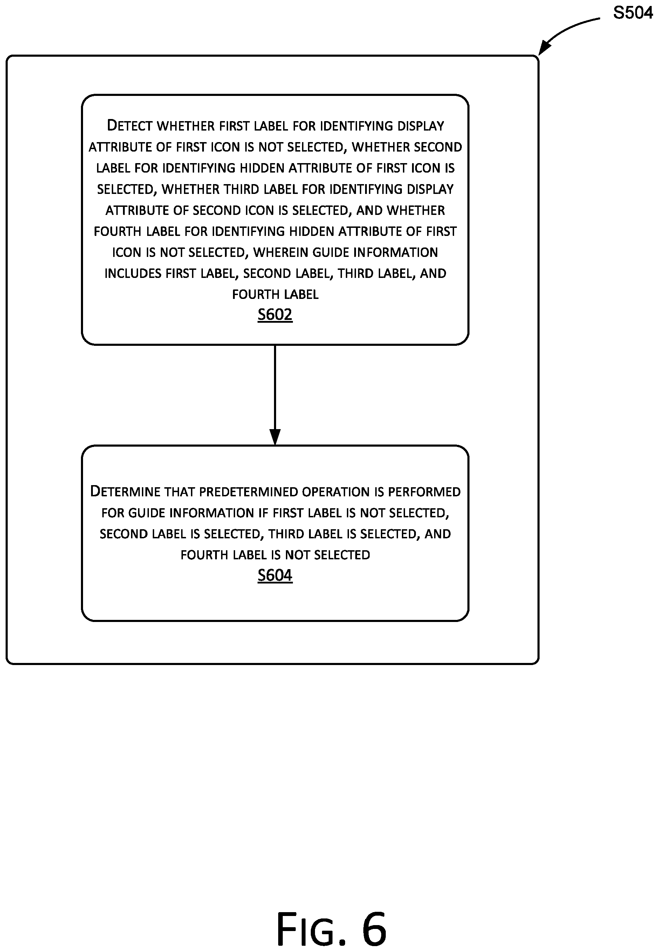

Optionally, FIG. 6 is a schematic flowchart of still another optional application icon processing method according to an example embodiment of the present disclosure. As shown in FIG. 6, the step of detecting whether a predetermined operation is performed for the guide information includes:
Step S602: It is detected whether a first label for identifying a display attribute of a first icon is not selected, whether a second label for identifying a hidden attribute of the first icon is selected, whether a third label for identifying a display attribute of a second icon is selected, and whether a fourth label for identifying the hidden attribute of the first icon is not selected, wherein the guide information includes the first label, the second label, the third label, and the fourth label.

Optionally, in step S602 of the present disclosure, on the terminal with the Android system, the first label for identifying the display attribute of the first icon may be activity-alias, the second label for identifying the hidden attribute of the first icon may be activity, the third label for identifying the display attribute of the second icon may be activity-alias, and the fourth label for identifying the hidden attribute of the second icon may be activity.

Step S604: It is determined that the predetermined operation is performed for the guide information if the first label is not selected, the second label is selected, the third label is selected, and the fourth label is not selected.

Optionally, in step S604 of the present disclosure, if the first label activity-alias for identifying the display attribute of the first icon is not selected, the second label activity for identifying the hidden attribute of the first icon is selected, the third label activity-alias for identifying the display attribute of the second icon is selected, and the fourth label activity for identifying the hidden attribute of the second icon is not selected, it is determined that the predetermined operation, i.e., hiding the first icon and displaying the second icon, is performed for the guide information formed by the above four labels.

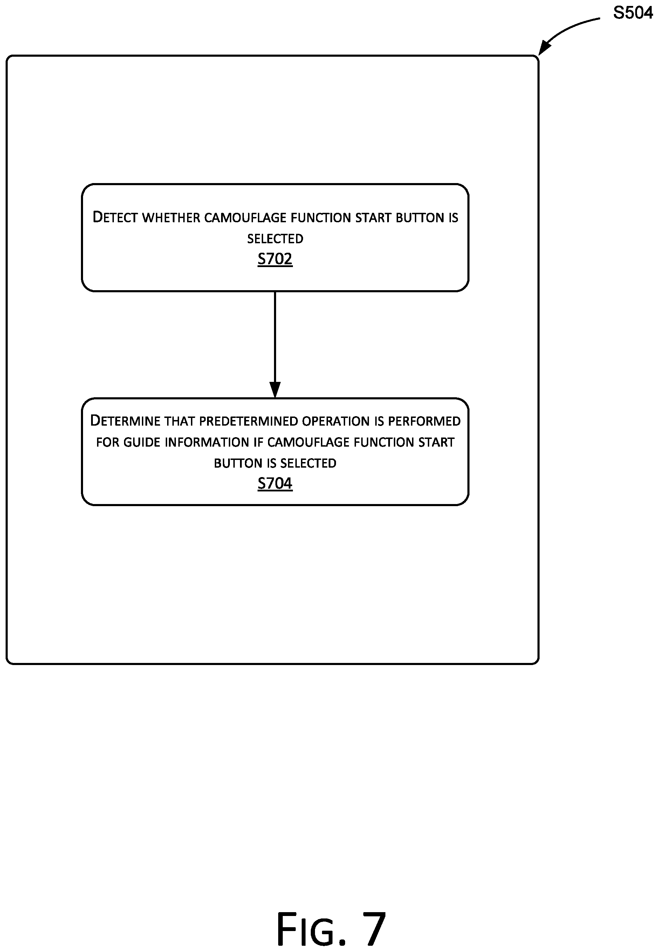

Optionally, FIG. 7 is a schematic flowchart of still another optional application icon processing method according to an example embodiment of the present disclosure. As shown in FIG. 7, the guide information includes: a camouflage function start button, and the step of detecting whether a predetermined operation is performed for the guide information includes:
Step S702: It is detected whether the camouflage function start button is selected.

Optionally, in step S702 of the present disclosure, the camouflage function start button may be set in a pull-down menu or a pull-up menu, and may also be set in another hidden interface of the mobile phone. For example, double-tapping a "Home" key of a certain type of terminal may display a partial hidden interface of common contacts at the top of a screen, and setting the camouflage function start button in the partial hidden interface is undoubtedly highly camouflaged.

Step S704: It is determined that the predetermined operation is performed for the guide information if the camouflage function start button is selected.

Optionally, in step S704 of the present disclosure, selecting the camouflage function start button is an essential condition of determining that the predetermined operation is performed for the guide information.

It should be noted that, for ease of description, the method example embodiments mentioned above are all described as a series of action combinations. However, those skilled in the art should know that the present disclosure is not limited to the action order described here, this is because some steps may be performed in other orders or simultaneously according to the present disclosure. Next, those skilled in the art should know that the example embodiments described in the specification are all preferred example embodiments, and actions and modules involved therein are not necessary for the present disclosure.

Based on the foregoing descriptions of the implementation manners, those skilled in the art may clearly understand that the method according to the above example embodiment may be implemented by software plus a necessary universal hardware platform, and certainly may also be implemented by hardware; however, in most situations, the former is a better implementation manner. Based on such understanding, the technical solution of the present disclosure essentially, or the portion contributing to the conventional techniques may be embodied in the form of a software product. The software product may be stored in a storage medium, such as a ROM/RAM, a magnetic disk, or an optical disc, and include several instructions that enable a terminal device (which may be a mobile phone, a computer, a server, a network device or the like) to perform the method in the example embodiments of the present disclosure.

### Example embodiment 2

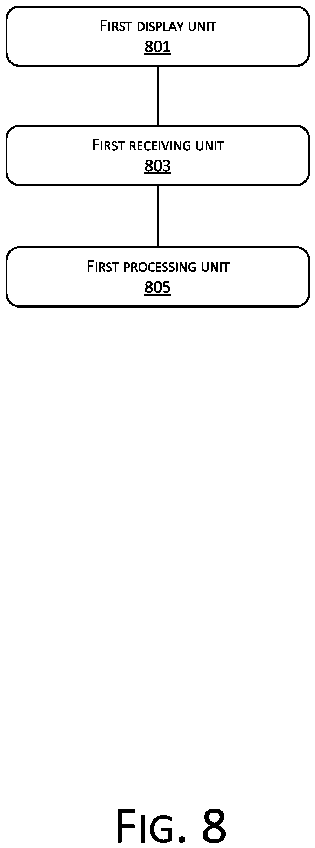

According to the example embodiment of the present disclosure, an application icon processing apparatus for implementing the application icon processing method is further provided. As shown in FIG. 8, the apparatus may include: a first display unit 801, a first receiving unit 803, and a first processing unit 805.

The first display unit 801 is configured to display a generic icon for identifying a first application on a screen of a terminal. The first receiving unit 803 is configured to receive an icon change instruction for the first application, wherein the icon change instruction is used for changing the generic icon of the first application. The first processing unit 805 is configured to change the generic icon displayed on the screen of the terminal into a camouflage icon in response to the icon change instruction.

It should be noted here that, the first display unit 801, the first receiving unit 803, and the first processing unit 805 are corresponding to step S202 to step S206 in Example embodiment 1, and examples and application scenarios where the three units and the corresponding steps are implemented are the same, but are not limited to the content disclosed in Example embodiment 1. It should be noted that the above units may be run in the computer terminal 10 provided in Example embodiment 1 as a part of the apparatus.

By using the above example embodiment of the present disclosure, by displaying the generic icon for identifying the first application on the screen of the terminal, and then responding to the icon change instruction when the icon change instruction for the first application is received, the objective of changing the generic icon displayed on the screen of the terminal into the camouflage icon is achieved, thus achieving the technical effects of camouflaging the application icon, improving elusiveness of the application and enhancing the security of the application, and further solving the technical problem in the conventional techniques of low security of applications.

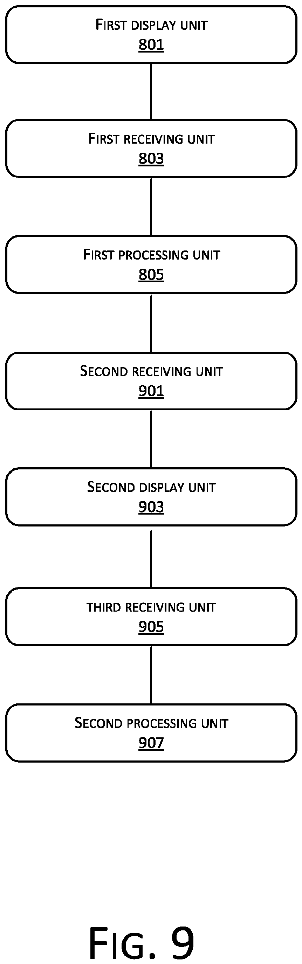

Optionally, as shown in FIG. 9, the application icon processing apparatus may further include: a second receiving unit 901, a second display unit 903, a third receiving unit 905, and a second processing unit 907.

The second receiving unit 901 is configured to receive an operation instruction generated by performing a first operation on the camouflage icon. The second display unit 903 is configured to display indication information corresponding to the operation instruction on the screen of the terminal. The third receiving unit 905 is configured to receive a password input based on the indication information. The second processing unit 907 is configured to determine a function corresponding to the input password, and start the function.

It should be noted here that, the second receiving unit 901, the second display unit 903, the third receiving unit 905, and the second processing unit 907 are corresponding to step S302 to step S308 in Example embodiment 1, and examples and application scenarios where the four units and the corresponding steps are implemented are the same, but the units are not limited to the content disclosed in Example embodiment 1. It should be noted that the above units may be run in the computer terminal 10 provided in Example embodiment 1 as a part of the apparatus.

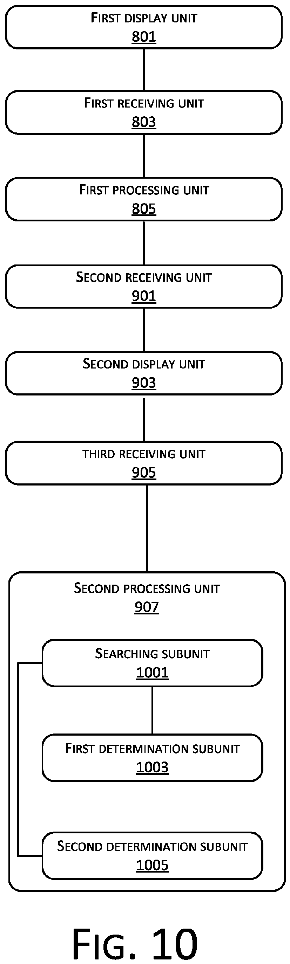

Optionally, as shown in FIG. 10, the second processing unit 907 may include: a searching subunit 1001, a first determination subunit 1003, and a second determination subunit 1005.

The searching subunit 1001 is configured to search a preset password library for a preset password matching the input password. The first determination subunit 1003 is configured to, if a preset password matching the input password is found, determine a function that the preset password points to as the function corresponding to the input password. The second determination subunit 1005 is configured to, if no preset password matching the input password is found, determine a function corresponding to the input password as a dialing function, to conduct communication dialing by using the input password.

It should be noted here that, the searching subunit 1001, the first determination subunit 1003, and the second determination subunit 1005 are corresponding to step S402 to step S406 in Example embodiment 1, and examples and application scenarios where the three subunits and the corresponding steps are implemented are the same, but the subunits are not limited to the content disclosed in Example embodiment 1. It should be noted that the above subunits may be run in the computer terminal 10 provided in Example embodiment 1 as a part of the apparatus.

Optionally, the function that the preset password points to includes at least one of the following: starting the first application, starting a second application, and redirecting to a program interface of a third application, wherein the first application, the second application, and the third application are different from one another.

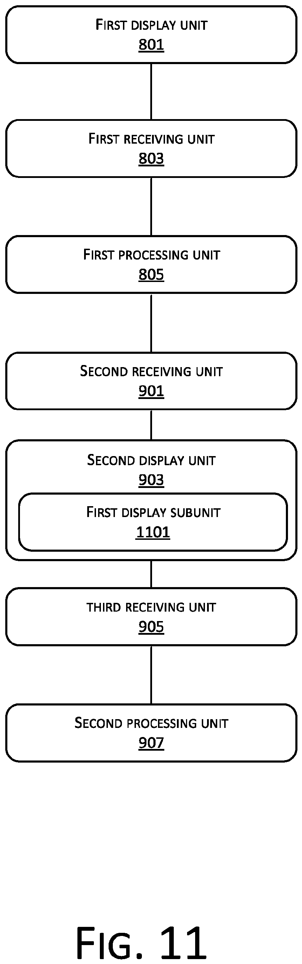

Optionally, as shown in FIG. 11, the second display unit 903 may include: a first display subunit 1101.

The first display subunit 1101 is configured to display an information input page on the screen of the terminal in response to the operation instruction, wherein the input page records the indication information, and the indication information at least includes: a numeral key and an enter key.

It should be noted here that, the first display subunit 1101 is corresponding to step S10 in Example embodiment 1, and examples and application scenarios where the subunit and the corresponding step are implemented are the same, but the subunit is not limited to the content disclosed in Example embodiment 1. It should be noted that the subunit may be run in the computer terminal 10 provided in Example embodiment 1 as a part of the apparatus.

Optionally, the first operation includes a tap operation, a double-tap operation, and a long-press operation.

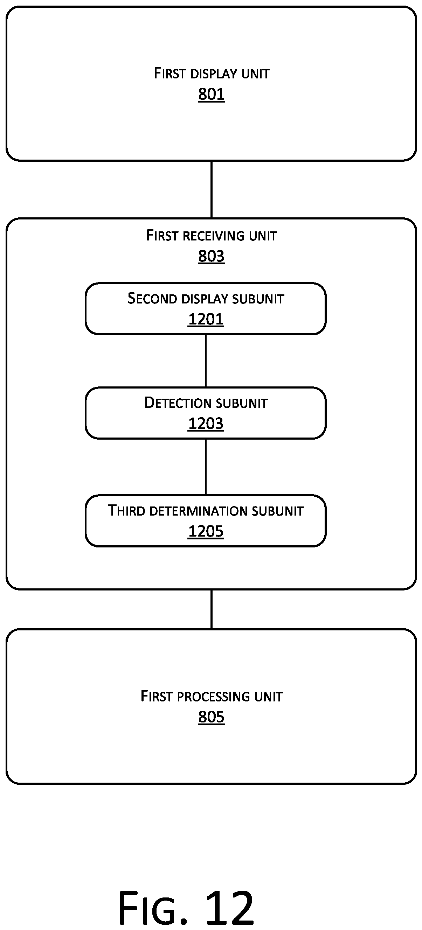

Optionally, as shown in FIG. 12, the first receiving unit 803 may include: a second display subunit 1201, a detection subunit 1203, and a third determination subunit 1205.

The second display subunit 1201 is configured to display a program interface of the first application on the screen of the terminal after a start instruction for starting the first application is received, wherein the program interface records guide information. The detection subunit 1203 is configured to detect whether a predetermined operation is performed for the guide information. The third determination subunit 1205 is configured to determine that the icon change instruction is received when it is detected that the predetermined operation is performed for the guide information.

It should be noted here that, the second display subunit 1201, the detection subunit 1203, and the third determination subunit 1205 are corresponding to step S502 to step S506 in Example embodiment 1, and examples and application scenarios where the three subunits and the corresponding steps are implemented are the same, but the subunits are not limited to the content disclosed in Example embodiment 1. It should be noted that the above subunits may be run in the computer terminal 10 provided in Example embodiment 1 as a part of the apparatus.

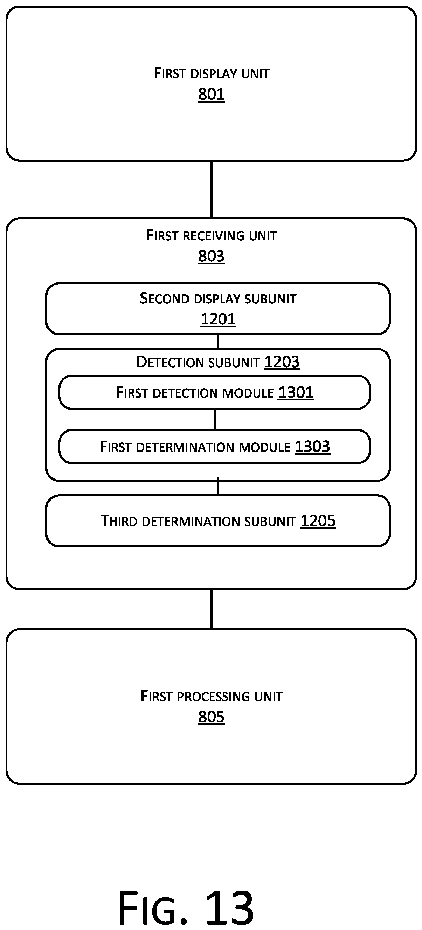

Optionally, as shown in FIG. 13, the detection subunit 1203 may include: a first detection module 1301 and a first determination module 1303.

The first detection module 1301 is configured to detect whether a first label for identifying a display attribute of a first icon is not selected, whether a second label for identifying a hidden attribute of the first icon is selected, whether a third label for identifying a display attribute of a second icon is selected, and whether a fourth label for identifying the hidden attribute of the first icon is not selected, wherein the guide information includes the first label, the second label, the third label, and the fourth label. The first determination module 1303 is configured to determine that the predetermined operation is performed for the guide information if the first label is not selected, the second label is selected, the third label is selected, and the fourth label is not selected.

It should be noted here that, the first detection module 1301 and the first determination module 1303 are corresponding to step S602 to step S604 in Example embodiment 1, and examples and application scenarios where the two modules and the corresponding steps are implemented are the same, but the modules are not limited to the content disclosed in Example embodiment 1. It should be noted that the above modules may be run in the computer terminal 10 provided in Example embodiment 1 as a part of the apparatus.

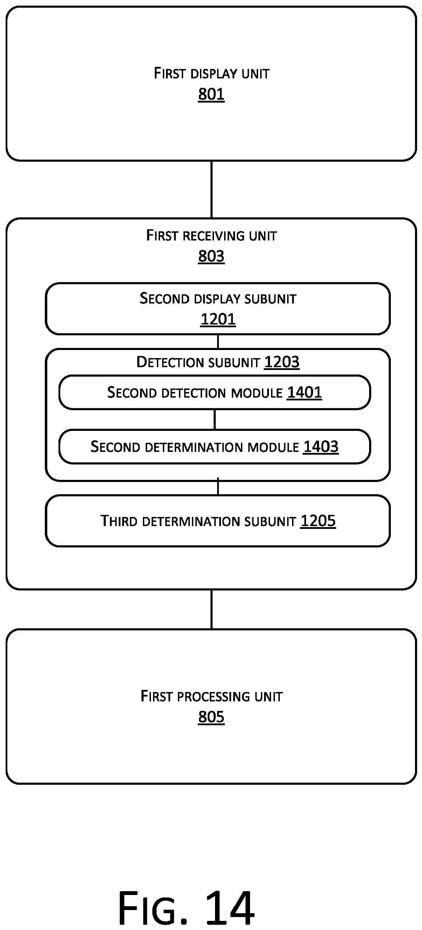

Optionally, the guide information includes: a camouflage function start button. Referring to FIG. 14, the detection subunit 1203 may include: a second detection module 1401 and a second determination module 1403.

The second detection module 1401 is configured to detect whether the camouflage function start button is selected. The second determination module 1403 is configured to determine that the predetermined operation is performed for the guide information if the camouflage function start button is selected.

It should be noted here that, the second detection module 1401 and the second determination module 1403 are corresponding to step S702 to step S704 in Example embodiment 1, and examples and application scenarios where the two modules and the corresponding steps are implemented are the same, but the modules are not limited to the content disclosed in Example embodiment 1. It should be noted that the above modules may be run in the computer terminal 10 provided in Example embodiment 1 as a part of the apparatus.

### Example embodiment 3

The example embodiment of the present disclosure may provide a computer terminal. The computer terminal may be any computer terminal device in a computer terminal group. Optionally, in this example embodiment, the computer terminal may also be replaced with a terminal device such as a mobile terminal.

Optionally, in this example embodiment, the computer terminal may be located in at least one of multiple network devices in a computer network.

In this example embodiment, the computer terminal may execute program codes of the following steps in the application icon processing method: displaying a generic icon for identifying a first application on a screen of a terminal; receiving an icon change instruction for the first application, wherein the icon change instruction is used for changing the generic icon of the first application; and changing the generic icon displayed on the screen of the terminal into a camouflage icon in response to the icon change instruction.

By using the above example embodiment of the present disclosure, by displaying the generic icon for identifying the first application on the screen of the terminal, and then responding to the icon change instruction when the icon change instruction for the first application is received, the objective of changing the generic icon displayed on the screen of the terminal into the camouflage icon is achieved, thus achieving the technical effects of camouflaging the application icon, improving elusiveness of the application and enhancing the security of the application, and further solving the technical problem in the conventional techniques of low security of applications.

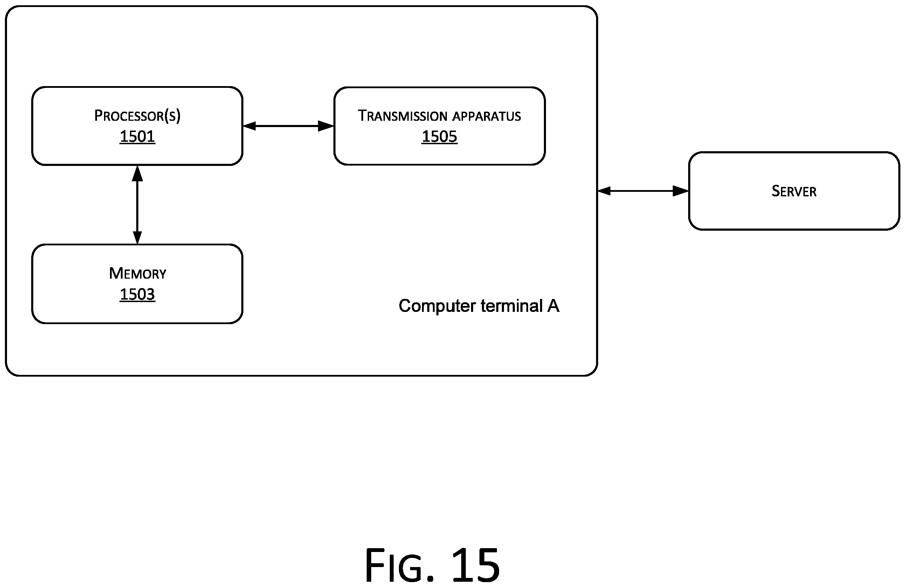

Optionally, FIG. 15 is a structural block diagram of a computer terminal according to an example embodiment of the present disclosure. As shown in FIG. 15, the computer terminal A may include: one or more (only one is shown) processors 1501, a memory 1503, and a transmission apparatus 1505.

The memory 1503 may be configured to store a software program and a module, e.g., a program instruction/module corresponding to the security vulnerability detection method and apparatus in the example embodiment of the present disclosure. The processor 1501 runs the software program and module stored in the memory 1503, to execute various function applications and perform data processing, i.e., implement the security vulnerability detection method. The memory 1503 may include a high-speed random access memory, and may further include a non-volatile memory, e.g., one or more magnetic storage apparatuses, a flash memory, or another non-volatile solid-state memory. In some examples, the memory 1503 may further include memories remotely disposed with respect to the processor, and the remote memories may be connected to the computer terminal A through a network. Examples of the network include, but are not limited to, the Internet, an Intranet, a local area network, a mobile communication network, and their combinations.

The transmission apparatus 1505 is configured to receive or send data via a network. A specific example of the network may include a wired network and a wireless network. In an example, the transmission apparatus 1505 includes a Network Interface Controller (NIC), which may be connected to another network device or a router through a network cable to communicate with the Internet or a local area network. In an example, the transmission apparatus 1505 may be a Radio Frequency (RF) module, which is configured to communicate with the Internet in a wireless manner.

Specifically, the memory 1503 is configured to store information of preset action conditions and preset authorized users, and applications.

The processor 1501 may use the transmission apparatus 1505 to call the information and the application stored in the memory 1503, to perform the following steps: displaying a generic icon for identifying a first application on a screen of a terminal; receiving an icon change instruction for the first application, wherein the icon change instruction is used for changing the generic icon of the first application; and changing the generic icon displayed on the screen of the terminal into a camouflage icon in response to the icon change instruction.

Optionally, the processor 1501 may further execute program codes of the following steps: receiving an operation instruction generated by performing a first operation on the camouflage icon; displaying indication information corresponding to the operation instruction on the screen of the terminal; receiving a password input based on the indication information; and determining a function corresponding to the input password, and starting the function.

Optionally, the processor 1501 may further execute program codes of the following steps: searching a preset password library for a preset password matching the input password; if a preset password matching the input password is found, determining a function that the preset password points to as the function corresponding to the input password; and if no preset password matching the input password is found, determining a function corresponding to the input password as a dialing function, to conduct communication dialing by using the input password.

Optionally, the processor 1501 may further execute program codes of the following step: displaying an information input page on the screen of the terminal in response to the operation instruction, wherein the input page records the indication information, and the indication information at least includes: a numeral key and an enter key.

Optionally, the processor 1501 may further execute program codes of the following steps: displaying a program interface of the first application on the screen of the terminal after a start instruction for starting the first application is received, wherein the program interface records guide information; detecting whether a predetermined operation is performed for the guide information; and determining that the icon change instruction is received when it is detected that the predetermined operation is performed for the guide information.

Optionally, the processor 1501 may further execute program codes of the following steps: detecting whether a first label for identifying a display attribute of a first icon is not selected, whether a second label for identifying a hidden attribute of the first icon is selected, whether a third label for identifying a display attribute of a second icon is selected, and whether a fourth label for identifying the hidden attribute of the first icon is not selected, wherein the guide information includes the first label, the second label, the third label, and the fourth label; and determining that the predetermined operation is performed for the guide information if the first label is not selected, the second label is selected, the third label is selected, and the fourth label is not selected.

Optionally, the processor 1501 may further execute program codes of the following steps: detecting whether the camouflage function start button is selected; and determining that the predetermined operation is performed for the guide information if the camouflage function start button is selected.

Those of ordinary skill in the art may understand that the structure shown in FIG. 15 is merely schematic, and the computer terminal may also be a terminal device such as a smart phone (such as an Android phone and an iOS phone), a tablet computer, a handheld computer, a Mobile Internet Devices (MID), and a PAD. FIG. 15 does not limit the structure of the above electronic apparatus. For example, the computer terminal A may include more or fewer components (such as a network interface and a display apparatus) than those shown in FIG. 15, or have a configuration different from that shown in FIG. 15.

Those of ordinary skill may understand that all or part of the steps in the methods in the above example embodiments may be implemented through a program instructing hardware related to a terminal device. The program may be stored in a computer readable storage medium. The storage medium may include: a flash memory disk, a Read-Only Memory (ROM), a Random Access Memory (RAM), a magnetic disk, an optical disc, or the like.

### Example embodiment 4

The example embodiment of the present disclosure further provides a storage medium. Optionally, in this example embodiment, the storage medium may be configured to store program codes executed by the application icon processing method provided by Example embodiment 1.

Optionally, in this example embodiment, the storage medium may be located in any computer terminal in a computer terminal group in a computer network, or located in any mobile terminal in a mobile terminal group.

Optionally, in this example embodiment, the storage medium is configured to store program codes of the following steps in the application icon processing method: displaying a generic icon for identifying a first application on a screen of a terminal; receiving an icon change instruction for the first application, wherein the icon change instruction is used for changing the generic icon of the first application; and changing the generic icon displayed on the screen of the terminal into a camouflage icon in response to the icon change instruction.

By using the above example embodiment of the present disclosure, by displaying the generic icon for identifying the first application on the screen of the terminal, and then responding to the icon change instruction when the icon change instruction for the first application is received, the objective of changing the generic icon displayed on the screen of the terminal into the camouflage icon is achieved, thus achieving the technical effects of camouflaging the application icon, improving elusiveness of the application and enhancing the security of the application, and further solving the technical problem in the conventional techniques of low security of applications.

It should be noted here that, any one of the computer terminal group may establish a communication relationship with a website server and a scanner, and the scanner may scan a value command of a web application executed by a php on a computer terminal.

The serial numbers of the example embodiments of the present disclosure are merely used for description, and do not imply the preference among the example embodiments.

In the above example embodiments of the present disclosure, the descriptions on the example embodiments have respective emphasis, and for parts that are not described in detail in an example embodiment, reference may be made to related descriptions in other example embodiments.

In the several example embodiments provided in the present disclosure, it should be understood that the disclosed technical content may be implemented in other manners. For example, the apparatus example embodiment described in the foregoing is merely schematic, for example, the division of units is merely division of logic functions, and in fact, there may be other division manners during actual implementation, for example, multiple units or components may be combined or may be integrated into another system, or some features may be ignored or not be executed. On the other hand, the displayed or discussed coupling or direct coupling or communication connection between them may be implemented by using some interfaces, and indirect coupling or communication connection between units or modules may be in an electrical form or other forms.

Units described as separated parts may be or may not be physically separated, parts displayed as units may be or may not be physical units, and they may be located at the same place, or be distributed to multiple network units. The objective of the solutions of the example embodiments may be implemented by selecting a part of or all units therein according to actual requirements.

In addition, various function units in the example embodiments of the present disclosure may be integrated into one processing unit, each unit may also exist alone physically, and two or more units may also be integrated into one unit. The integrated unit may be implemented in a form of hardware, and may also be implemented in a form of a software function unit.

The integrated unit, if implemented in a form of a software functional unit and sold or used as an independent product, may be stored in a computer readable storage medium. Based on such understanding, the technical solutions of the present disclosure essentially, or the part contributing to the conventional techniques, or all or a part of the technical solutions may be implemented in a form of a software product. The computer software product may be stored in a storage medium, and includes several instructions for instructing a computer device (which may be a personal computer, a server, a network device or the like) to execute all or a part of the steps in the methods described in the example embodiments of the present disclosure. The storage medium includes: a USB flash disk, a Read-Only Memory (ROM), a Random Access Memory (RAM), a mobile hard disk, a magnetic disk, an optical disc, or other mediums that may store program codes.

The above descriptions are merely preferred implementation manners of the present disclosure. It should be noted that, those of ordinary skill in the art may further make several improvements and modifications without departing from the principle of the present disclosure, and the improvements and modifications shall all fall within the protection scope of the present disclosure.

## Claims

1. An application icon processing method comprising:
displaying a generic icon for identifying a first application on a screen of a terminal;
receiving an icon change instruction for the first application, wherein the icon change instruction is used for changing the generic icon of the first application; and
changing the generic icon displayed on the screen of the terminal into a camouflage icon in response to the icon change instruction.

2. The method of claim 1, wherein after the step of changing the generic icon displayed on the screen of the terminal into a camouflage icon, the method further comprises:
receiving an operation instruction generated by performing a first operation on the camouflage icon;
displaying indication information corresponding to the operation instruction on the screen of the terminal;
receiving a password input based on the indication information; and
determining a function corresponding to the input password, and starting the function.

3. The method of claim 2, wherein the step of determining a function corresponding to the input password comprises:
searching a preset password library for a preset password matching the input password;
if a preset password matching the input password is found, determining a function which the preset password points to as the function corresponding to the input password; and
if no preset password matching the input password is found, determining a function corresponding to the input password as a dialing function, to conduct communication dialing by using the input password.

4. The method of claim 3, wherein the function which the preset password points to comprises at least one of the following:
starting the first application;
starting a second application; and
redirecting to a program interface of a third application,
wherein the first application, the second application, and the third application are different from one another.

5. The method of claim 2, wherein the step of displaying indication information corresponding to the operation instruction on the screen of the terminal comprises:
displaying an information input page on the screen of the terminal in response to the operation instruction,
wherein:
the input page records the indication information; and
the indication information at least comprises a numeral key and an enter key.

6. The method of claim 2, wherein the first operation comprises:
a tap operation;
a double-tap operation; and
a long-press operation.

7. The method of claim 1, wherein the step of receiving the icon change instruction for the first application comprises:
displaying a program interface of the first application on the screen of the terminal after a start instruction for starting the first application is received, wherein the program interface records guide information;
detecting whether a predetermined operation is performed for the guide information; and
determining that the icon change instruction is received in response to detecting that the predetermined operation is performed for the guide information.

8. The method of claim 7, wherein the step of detecting whether the predetermined operation is performed for the guide information comprises:
detecting whether a first label for identifying a display attribute of a first icon is not selected, whether a second label for identifying a hidden attribute of the first icon is selected, whether a third label for identifying a display attribute of a second icon is selected, and whether a fourth label for identifying the hidden attribute of the first icon is not selected, wherein the guide information comprises the first label, the second label, the third label, and the fourth label; and
determining that the predetermined operation is performed for the guide information in response to determining that the first label is not selected, the second label is selected, the third label is selected, and the fourth label is not selected.

9. The method of claim 7, wherein:
the guide information comprises a camouflage function start button; and
the step of detecting whether the predetermined operation is performed for the guide information comprises:
detecting whether the camouflage function start button is selected; and
determining that the predetermined operation is performed for the guide information if the camouflage function start button is selected.

10. An application icon processing apparatus comprising:
a first display unit configured to display a generic icon for identifying a first application on a screen of a terminal;
a first receiving unit configured to receive an icon change instruction for the first application, wherein the icon change instruction is used for changing the generic icon of the first application; and
a first processing unit configured to change the generic icon displayed on the screen of the terminal into a camouflage icon in response to the icon change instruction.

11. The apparatus of claim 10, further comprising:
a second receiving unit configured to receive an operation instruction generated by performing a first operation on the camouflage icon;
a second display unit configured to display indication information corresponding to the operation instruction on the screen of the terminal;
a third receiving unit configured to receive a password input based on the indication information; and
a second processing unit configured to determine a function corresponding to the input password, and start the function.

12. The apparatus of claim 11, wherein the second processing unit comprises:
a searching subunit configured to search a preset password library for a preset password matching the input password;
a first determination subunit configured to, if a preset password matching the input password is found, determine a function that the preset password points to as the function corresponding to the input password; and
a second determination subunit configured to, if no preset password matching the input password is found, determine a function corresponding to the input password as a dialing function, to conduct communication dialing by using the input password.

13. The apparatus of claim 11, wherein the second display unit comprises:
a first display subunit configured to display an information input page on the screen of the terminal in response to the operation instruction, wherein the input page records the indication information, and the indication information at least comprises: a numeral key and an enter key.

14. The apparatus of claim 10, wherein the first receiving unit comprises:
a second display subunit configured to display a program interface of the first application on the screen of the terminal after a start instruction for starting the first application is received, wherein the program interface records guide information;
a detection subunit configured to detect whether a predetermined operation is performed for the guide information; and
a third determination subunit configured to determine that the icon change instruction is received when it is detected that the predetermined operation is performed for the guide information.

15. The apparatus of claim 14, wherein the detection subunit comprises:
a first detection module configured to detect whether a first label for identifying a display attribute of a first icon is not selected, whether a second label for identifying a hidden attribute of the first icon is selected, whether a third label for identifying a display attribute of a second icon is selected, and whether a fourth label for identifying the hidden attribute of the first icon is not selected, wherein the guide information comprises the first label, the second label, the third label, and the fourth label; and
a first determination module configured to determine that the predetermined operation is performed for the guide information if the first label is not selected, the second label is selected, the third label is selected, and the fourth label is not selected.
